# EUROPEAN PATENT APPLICATION

(11) **EP 3 109 074 A1**
(43) Date of publication of application: **28.12.2016**
(21) Application number: 15751485.2
(22) Date of filing: 18.02.2015
(51) Int. Cl.: B60H 1/00, B60H 1/14, B60H 1/16, B60H 1/18, B60H 1/26, B62D 25/08

(54) **AIR-CONDITIONING DEVICE FOR VEHICLE**

(30) Priority: 19.02.2014 JP 2014029221
(71) Applicant: Panasonic Intellectual Property Management Co., Ltd., Osaka-shi, Osaka 570-6207 (JP)
(72) Inventor: NAKASHIMA, Yu, Osaka 540-6207 (JP); TERADA, Tomohiro, Osaka 540-6207 (JP); TEI, Zenyou, Osaka 540-6207 (JP)
(74) Representative: Schwabe - Sandmair - Marx
(86) International application number: PCT/JP2015/000755
(87) International publication number: WO 2015/125474

(57) **Abstract**

An air-conditioning device for a vehicle includes a heat exchanger, a first air flow path, and a second air flow path. The heat exchanger is disposed in an inside space of an intake duct that is provided outside a vehicle interior and that has an opening. The heat exchanger includes a first heat-exchange flow path and a second heat-exchange flow path, and exchanges heat between air flowing in the first heat-exchange flow path and air flowing in the second heat-exchange flow path. The first air flow path introduces, to the first heat-exchange flow path through an opening of the intake duct, air heated by heat generated in an engine, and discharges the air to the outside of the vehicle from the first heat-exchange flow path. The second air flow path introduces, into the vehicle interior through an outside air inlet of the intake duct, outside air introduced into the second heat-exchange flow path.

## Description

### TECHNICAL FIELD

The present invention relates to an air-conditioning device for a vehicle that utilizes heat in an engine room.

### BACKGROUND ART

As a conventional air-conditioning device for a vehicle that utilizes heat in an engine room, there has been known an air-conditioning device in which, an air passage having an introducing port and a discharge port inside the engine room is connected to a heat exchanger installed inside a vehicle interior, so that air heated by the heat exchanger is heated by a main heat exchanger for exchanging heat with cooling water in the engine (Patent Literature 1).

### Citation List

### Patent Literature

PTL 1: Unexamined Japanese Utility Model Publication No. S59-74109

### SUMMARY

The present invention provides an air-conditioning device for a vehicle that utilizes heat in an engine room by exploiting an existing space without separately securing a space dedicated to installing a heat exchanger.

An air-conditioning device for a vehicle according to the present invention includes a heat exchanger, a first air flow path, and a second air flow path. The heat exchanger is disposed in an inside space of an intake duct that is provided outside a vehicle interior and that has an opening. The heat exchanger includes a first heat-exchange flow path and a second heat-exchange flow path, and exchanges heat between air flowing in the first heat-exchange flow path and air flowing in the second heat-exchange flow path. The first air flow path introduces, to the first heat-exchange flow path through an opening of the intake duct, air heated by heat generated in an engine, and discharges the air to outside of the vehicle from the first heat-exchange flow path. The second air flow path introduces, into the vehicle interior through an outside air inlet of the intake duct, outside air introduced into the second heat-exchange flow path.

In this manner, the opening is formed at the intake duct provided outside the vehicle interior, and the air heated by the heat generated in the engine is introduced into the heat exchanger disposed in the inside space of the intake duct. With this configuration, it is possible to utilize the heat in the engine room without separately securing a space dedicated to installing the heat exchanger.

### BRIEF DESCRIPTION OF DRAWINGS

FIG. 1 is a conceptual diagram illustrating a configuration of an air-conditioning device for a vehicle in an exemplary embodiment of the present invention.
FIG. 2 is a partial perspective view showing a vehicle mounted with the air-conditioning device for a vehicle in the exemplary embodiment of the present invention.
FIG. 3 is a plan view, as viewed from the top of the vehicle, showing the vehicle mounted with the air-conditioning device for a vehicle in the exemplary embodiment of the present invention.
FIG. 4 is a cross-sectional view taken along line 4-4 of FIG. 3.
FIG. 5 is a view showing the vicinity of a heat exchanger unit in an intake duct, in which the heat exchanger unit in the air-conditioning device for a vehicle in the exemplary embodiment of the present invention is disposed.
FIG. 6 is a view showing the heat exchanger unit and an air flow path in the air-conditioning device for a vehicle in the exemplary embodiment of the present invention.
FIG. 7 is a cross-sectional view taken along line 7-7 of FIG. 5.
FIG. 8 is a view showing a configuration of a sensible heat exchanger in the exemplary embodiment of the present invention.

### DESCRIPTION OF EMBODIMENT

Prior to the description of an exemplary embodiment of the present invention, description will be made on a problem experienced by the conventional air-conditioning device for a vehicle. In the air-conditioning device for a vehicle in the prior art which utilizes heat in an engine room, it is necessary to separately secure a space dedicated to installing a heat exchanger inside a vehicle interior.

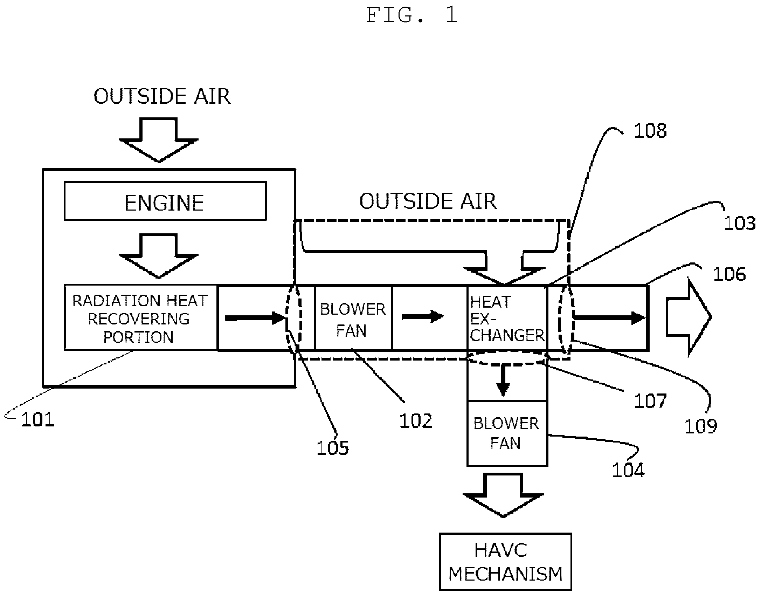

An air-conditioning device for a vehicle in an exemplary embodiment of the present invention will be described below with reference to the drawings. FIG. 1 is a conceptual diagram illustrating a configuration of an air-conditioning device for a vehicle in an exemplary embodiment of the present invention.

Radiation heat recovering portion 101 is installed inside an engine room, to recover radiation heat from an engine. Radiation heat recovering portion 101 is provided at an introducing port of a first air flow path, so as to recover air in the engine room heated by the engine and then introduce the air into the first air flow path.

Blower fan 102 located inside the first air flow path takes in the air from the engine room, and then, sends the air to heat exchanger 103 which is also located inside the first air flow path.

Heat exchanger 103 includes a first heat-exchange flow path and a second heat-exchange flow path, and exchanges heat between the air flowing in the first heat-exchange flow path and the air flowing in the second heat-exchange flow path.

The air introduced from the engine room by blower fan 102 is introduced into the first heat-exchange flow path of heat exchanger 103. The first heat-exchange flow path of heat exchanger 103 constitutes the first air flow path. The air whose heat is exchanged is discharged to the outside of a vehicle through discharge port 106 of the first air flow path.

Discharge port 106 of the first air flow path is located at a back side of a fender. A negative pressure acts on discharge port 106 located at the back side of the fender, so that a suction force for introducing air to the first air flow path from the engine room is generated inside the first air flow path.

In FIG. 1, intake duct 108 is indicated by a broken line. An intake duct is a duct that is provided outside the vehicle interior to take air outside of a vehicle (i.e., outside air) into the vehicle interior. Specifically, the intake duct is a duct that is located in front of a window shield glass, between the window shield glass and a hood panel, and extends in a direction of a vehicular width.

The intake duct includes an opening, through which the air outside of the vehicle is taken into the intake duct, and an outside air inlet, through which the air outside of the vehicle taken into the intake duct is taken into the vehicle interior. Moreover, the intake duct has a discharge port, through which water inside the intake duct is discharged to the outside of the vehicle. The intake duct has a sufficient space for installing heat exchanger 103 therein.

In FIG. 1, outside air inlet 107 is an opening formed at intake duct 108. Opening 105 is formed at intake duct 108, thus constituting the first air flow path. Opening 109 is formed at intake duct 108 to discharge water inside the intake duct to the outside of the vehicle.

The outside air taken into the intake duct is introduced into the second heat-exchange flow path of heat exchanger 103. The second heat-exchange flow path of heat exchanger 103 constitutes the second air flow path. Air flowing in the second heat-exchange flow path, whose heat is exchanged with the air flowing in the first heat-exchange flow path, is introduced into the vehicle interior through outside air inlet 107 included in the intake duct. The air introduced into the vehicle interior is delivered to an existing HVAC (Heating, Ventilation, and Air Conditioning) mechanism by blower fan 104 which is provided inside the vehicle interior and connected to the discharge port of the second air flow path.

As described above, the air-conditioning device for the vehicle in the present exemplary embodiment includes the first air flow path for introducing the air heated by the heat generated in the engine room into the first heat-exchange flow path through opening 105 formed at the intake duct and discharging the air to the outside of the vehicle from the first heat-exchange flow path, and the second air flow path for introducing the outside air introduced into the second heat-exchange flow path into the vehicle interior through outside air inlet 107 of the intake duct.

The air-conditioning device for the vehicle in the present exemplary embodiment includes radiation heat recovering portion 101 for recovering the radiation heat from the engine at the introducing port of the first air flow path.

The air-conditioning device for the vehicle in the present exemplary embodiment includes first blower fan 102 that is provided between the introducing port of the first air flow path and the first heat-exchange flow path, first blower fan 102 configured to send the air inside the engine room to the first heat-exchange flow path.

In the air-conditioning device for the vehicle in the present exemplary embodiment, the discharge port of the first air flow path is located at the back side of the fender.

In the air-conditioning device for the vehicle in the present exemplary embodiment, the discharge port of the second air flow path is connected to second blower fan 104 provided inside the vehicle interior.

The air-conditioning device for the vehicle in the present exemplary embodiment is configured such that heat exchanger 103 is disposed in the existing space inside the intake duct, heat exchanger 103 including the first heat-exchange flow path and the second heat-exchange flow path, and configured to exchange the heat between the air flowing in the first heat-exchange flow path and the air flowing in the second heat-exchange flow path.

A description will be given of a specific structure of the air-conditioning device for the vehicle in the present exemplary embodiment with reference to the drawings.

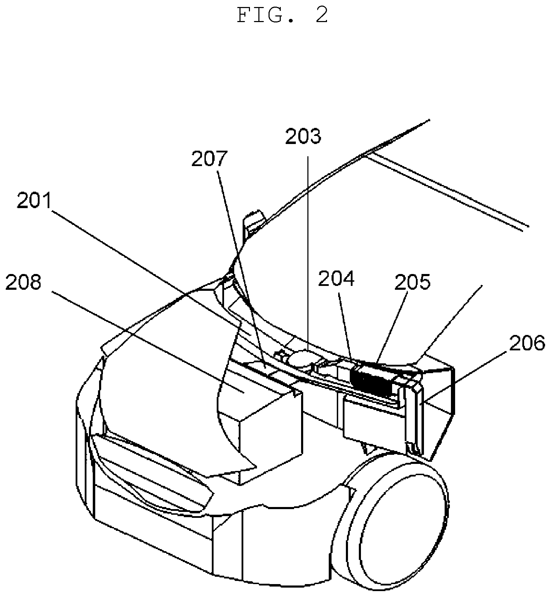

FIG. 2 is a partial perspective view showing a vehicle mounted with the air-conditioning device for a vehicle in the present exemplary embodiment.

Sensible heat exchanger unit 205 is disposed at the upper section of intake duct lower member 201 that constitutes the intake duct. Sensible heat exchanger unit 205 is configured to introduce the air heated by engine 208 from the engine room through an opening formed at intake duct lower member 201.

The air from the engine room is introduced into a first heat-exchange flow path of a sensible heat exchanger included in sensible heat exchanger unit 205 through air introducing plate 207 provided inside the engine room, sirocco fan 203 provided on intake duct lower member 201, and inside air introducing duct 204.

The air whose heat is exchanged in the first heat-exchange flow path is discharged to the outside of the vehicle through a discharge port provided at the back side of the fender for inside air discharging duct 206. Inside air discharging duct 206 passes a discharge port, not shown, included in the intake duct, the discharge port for discharging water inside the intake duct to the outside of the vehicle.

A negative pressure acts on the discharge port of inside air discharging duct 206 provided at the back side of the fender, whereby the function of sucking the air from the engine room to sensible heat exchanger unit 205 is provided.

The opening formed at intake duct lower member 201 corresponds to opening 105 formed at the intake duct constituting the first air flow path shown in FIG. 1. Air introducing plate 207 provided inside the engine room corresponds to radiation heat recovering portion 101 provided at the introducing port of the first air flow path shown in FIG. 1. Sirocco fan 203 corresponds to blower fan 102 located inside the first air flow path shown in FIG. 1.

The introducing port of the first air flow path, sirocco fan 203, inside air introducing duct 204, the first heat-exchange flow path, and inside air discharging duct 206 constitute the first air flow path shown in FIG. 1.

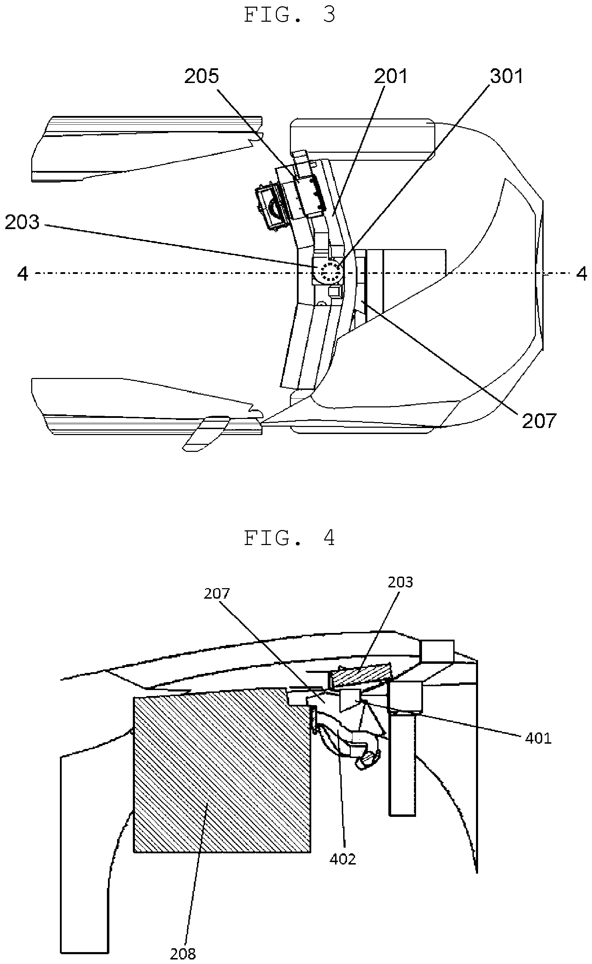

FIG. 3 is a plan view, as viewed from the top of the vehicle, showing the vehicle mounted with the air-conditioning device for the vehicle in the exemplary embodiment of the present invention.

An exhaust pipe, serving as a passage for air burned by the engine, is provided below air introducing plate 207. Air introducing plate 207 is disposed so as to cover the exhaust pipe. Moreover, opening 301 is formed below sirocco fan 203. Opening 301 formed at intake duct lower member 201 is located at a position where a plane defined by a line obtained by projecting the exhaust pipe rearward along a vehicle axis from the front of the vehicle and a line that passes the opening and is parallel to the projected line becomes rectangular.

In other words, in the case where the exhaust pipe is moved in parallel to the direction of the vehicle axis, opening 301 is located above the exhaust pipe.

Since opening 301 is formed at the above-described position, the air heated by the exhaust pipe can be easily introduced into the first air flow path by the air introduced into the engine room as the vehicle travels even in a configuration without an air introducing plate.

Sensible heat exchanger unit 205 is installed such that a side opposite to the outside air inlet is separated from the intake duct, so that the outside air introduced into the intake duct can be introduced into the second heat-exchange flow path of the sensible heat exchanger included in sensible heat exchanger unit 205. In other words, sensible heat exchanger unit 205 is disposed such that, inside the intake duct, a space is defined in a direction forward of the vehicle at sensible heat exchanger unit 205.

FIG. 4 is a cross-sectional view taken along line 4-4 of FIG. 3. In FIG. 4, air introducing plate 207 has an opening toward engine 208, and has a box shape in which an opening width in a longitudinal direction of the vehicle is increased toward engine 208 from introducing port 401 of the first air flow path.

Air introducing plate 207 is disposed so as to cover a plurality of exhaust pipes 402 located nearby the engine. Air introducing plate 207 is configured to recover air inside the engine room, heated by radiation heat of exhaust pipes 402, and to guide the air to introducing port 401 of the first air flow path. Air introducing plate 207 is made of a material such as stainless steel or an iron plate that is hardly deformed by heat.

Air is taken in from the engine room by the suction force of sirocco fan 203.

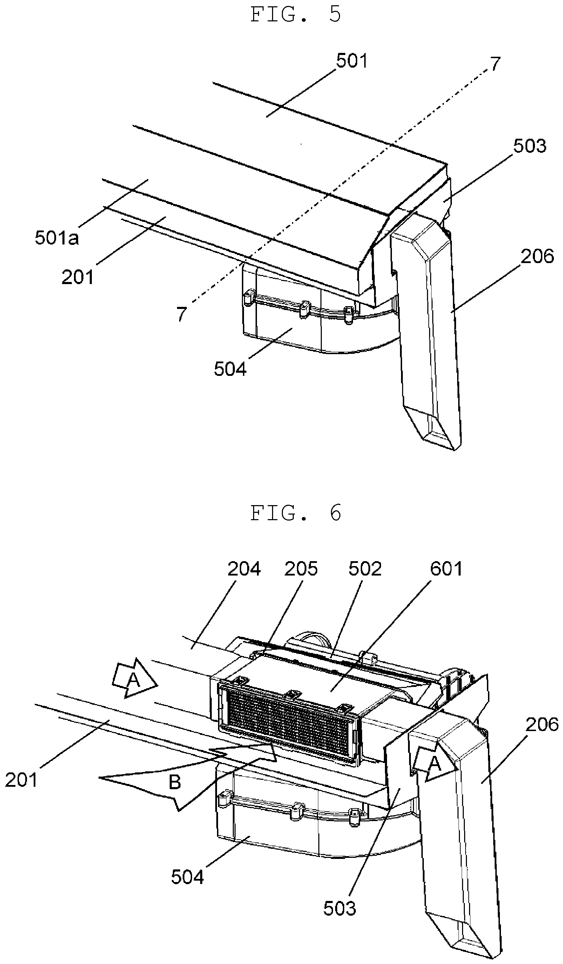

FIG. 5 is a view showing the vicinity of sensible heat exchanger unit 205 at the intake duct, in which sensible heat exchanger unit 205 in the exemplary embodiment of the present invention is disposed. Sensible heat exchanger unit 205 is disposed in the inside space of the intake duct in FIG. 5.

In the present exemplary embodiment, the intake duct includes intake duct lower member 201, intake duct upper member 501, a part of a chassis frame, not shown, and parts 503 of the chassis frame. Intake duct upper member 501 covers intake duct lower member 201. A part of the chassis frame is brought into contact with intake duct lower member 201 and intake duct upper member 501, and furthermore, defines a polygonal pipe together with intake duct lower member 201 and intake duct upper member 501. Parts 503 of the chassis frame are arranged on both sides of the polygonal pipe, thereby constituting the side surface of the intake duct.

Intake duct upper member 501 has inclined surface 501a. A plurality of openings, not shown, through which the outside air is taken into the intake duct, are formed at inclined surface 501a.

FIG. 6 is a view in which intake duct upper member 501 is omitted in FIG. 5, and shows sensible heat exchanger unit 205 and the air flow path.

Sensible heat exchanger unit 205 disposed in the inside space of the intake duct is connected to outside air introducing duct 502 for introducing outside air, which is taken into the intake duct through the opening of intake duct upper member 501, into the vehicle interior through the second heat-exchange flow path of the sensible heat exchanger.

Outside air introducing duct 502 passes the outside air inlet, not shown, included in the intake duct, and is connected to sirocco fan 504 provided inside the vehicle interior.

The second heat-exchange flow path of the sensible heat exchanger and outside air introducing duct 502 constitute the second air flow path in FIG. 1. Sirocco fan 504 corresponds to blower fan 104 in FIG. 1.

At part 503 of the chassis frame constituting the side surface of the intake duct, there is formed a discharge port, through which water inside the intake duct is discharged to the outside of the vehicle. Inside air discharging duct 206 of the first air flow path passes the discharge port, and then, discharges the inside air to the outside of the vehicle. The discharge port formed at part 503 of the chassis frame corresponds to opening 109 in FIG. 1.

Sensible heat exchanger unit 205 includes case 601 and a sensible heat exchanger disposed inside the case. An air intake port is formed at case 601. A plurality of intake ports are formed independently of each other so as to prevent any mixture of the air in the first heat-exchange flow path and the air in the second heat-exchange flow path of the sensible heat exchanger.

Air flow path A shown in FIG. 6 is the first air flow path, in which the air from the engine room flows. The air from the engine room is introduced into one of the intake ports of case 601 by inside air introducing duct 204. The heat of the air introduced from the intake port is exchanged with the heat of the air in air flow path B flowing in the second heat-exchange flow path, by the first heat-exchange flow path, so that the air after the heat exchange is discharged to the outside of the vehicle through inside air discharging duct 206.

Air flow path B is formed in a space between sensible heat exchanger unit 205 and the intake duct. Air flow path B is an air flow path in which the air introduced into the intake duct is introduced into the second heat-exchange flow path of the sensible heat exchanger. The heat of the air introduced into the second heat-exchange flow path is exchanged with the heat of the air in the first heat-exchange flow path. The air whose heat is exchanged is introduced into the vehicle interior through the outside air inlet of the intake duct by outside air introducing duct 502.

Air is taken into the vehicle interior from the intake duct by the suction force of sirocco fan 504 provided inside the vehicle interior.

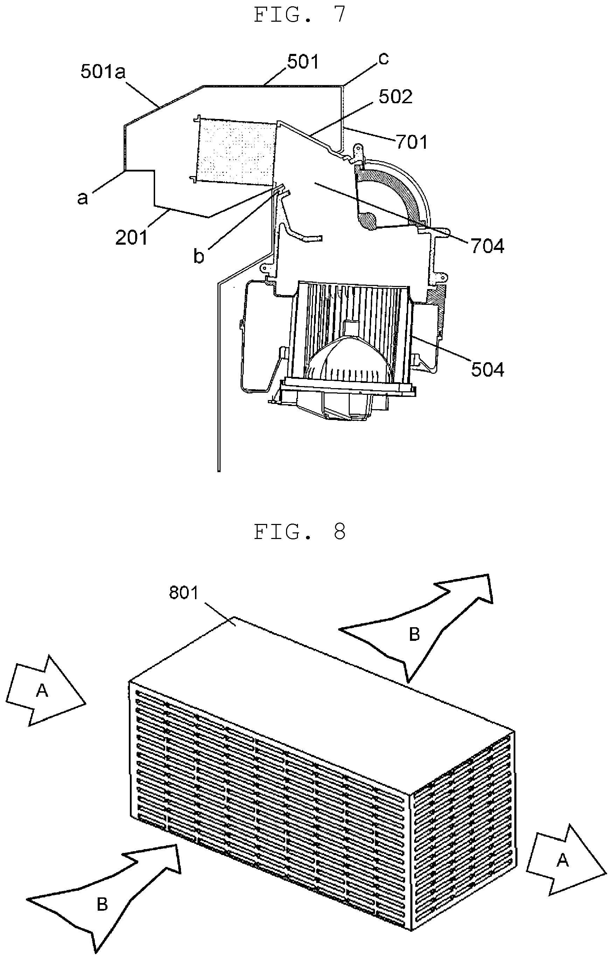

FIG. 7 is a cross-sectional view taken along line 7-7 of FIG. 5. Cross sections designated by a part between reference character a and reference character b show intake duct lower member 201. Intake duct upper member 501 covering intake duct lower member 201 is a cross section designated by a part between reference character a and reference character c. A plurality of openings are formed at inclined surface 501a of the intake duct upper member so as to take the outside air into the intake duct.

A cross section designated by a part between reference character c and reference character b is part 701 of the chassis frame that is brought into contact with intake duct lower member 201 and intake duct upper member 501, and forms the polygonal pipe with intake duct lower member 201 and intake duct upper member 501.

At part 701 of the chassis frame constituting the intake duct is provided outside air inlet 704.

Sensible heat exchanger unit 205 is installed separately from the intake duct on a side opposite to the outside air inlet such that the outside air introduced into the intake duct can be introduced into the second heat-exchange flow path of the sensible heat exchanger included in sensible heat exchanger unit 205.

The outside air introduced into the intake duct through the opening of inclined surface 501a passes the space between the intake duct and the surface opposite to the outside air inlet of sensible heat exchanger unit 205, and then, is introduced into the second heat-exchange flow path of the sensible heat exchanger.

The air whose heat is exchanged in the second heat-exchange flow path is introduced into the vehicle interior by outside air introducing duct 502 through outside air inlet 704 included in the intake duct. The air introduced into the vehicle interior is delivered to the existing HAVC mechanism by sirocco fan 504 provided inside the vehicle interior connected to the discharge port of outside air introducing duct 502. The existing HAVC mechanism has various kinds of air-conditioning functions of, for example, an electric heater.

FIG. 8 is a view showing a configuration of sensible heat exchanger 801 in the present exemplary embodiment. Sensible heat exchanger 801 is disposed inside case 601 of sensible heat exchanger unit 205. Sensible heat exchanger 801 is a stationary type heat exchanger in which flow paths are fixed. Sensible heat exchanger 801 includes the first heat-exchange flow path and the second heat-exchange flow path that are adjacent to each other with a heat conductive partition wall interposed therebetween.

Heat is exchanged through the heat conductive partition wall between the air flowing in the first heat-exchange flow path from the engine room and the air that flows in the second heat-exchange flow path and introduced into the intake duct.

As described above, in the air-conditioning device for the vehicle in the present exemplary embodiment, opening 105 is formed at the intake duct, and the air heated by the heat generated in the engine room is introduced into sensible heat exchanger 801 disposed in the inside space of the intake duct. Accordingly, the air-conditioning device for the vehicle utilizing the heat in the engine room without separately securing a space dedicated to installing sensible heat exchanger 801 can be provided.

Although the description has been given of the configuration in which the sirocco fan is provided inside the first air flow path in the exemplary embodiment, the air from the engine room may be introduced only under the negative pressure at the discharge port of the first air flow path provided at the back side of the fender.

Moreover, although the description has been given of the sensible heat exchanger serving as the heat exchanger, a total heat exchanger may be used, and therefore, the present invention is not limited to the sensible heat exchanger.

Additionally, in the present exemplary embodiment, although the description has been given of the intake duct including: the polygonal pipe constituted of intake duct lower member 201, intake duct upper member 501, and part 701 of the chassis frame; and parts 503 of the chassis frame on both sides of the polygonal pipe, the shape of the intake duct, the member constituting the intake duct, or the number of members are arbitrary, and therefore, the configuration of the intake duct is not limited thereto.

The exemplary embodiment is merely one example, and thus, the present invention may be variously modified within the scope not departing from the gist.

### INDUSTRIAL APPLICABILITY

The present invention is suitable for the air-conditioning device for the vehicle such as an automobile utilizing the heat generated in the engine.

### REFERENCE MARKS IN THE DRAWINGS

- 101: radiation heat recovering portion
- 102: blower fan
- 103: heat exchanger
- 104: blower fan
- 105: opening
- 106: discharge port
- 107: outside air inlet
- 108: intake duct
- 109: opening
- 201: intake duct lower member
- 203: sirocco fan
- 204: inside air introducing duct
- 205: sensible heat exchanger unit
- 206: inside air discharging duct
- 207: air introducing plate
- 208: engine
- 301: opening
- 401: introducing port
- 402: exhaust pipe
- 501: intake duct upper member
- 501a: inclined surface
- 502: outside air introducing duct
- 503: part of chassis frame
- 504: sirocco fan
- 601: case
- 701: part of chassis frame
- 704: outside air inlet
- 801: sensible heat exchanger

## Claims

1. An air-conditioning device for a vehicle to be mounted on a vehicle having a vehicle interior and an engine, the device comprising:
a heat exchanger disposed in an inside space of an intake duct that is provided outside the vehicle interior and that has an opening, the heat exchanger including a first heat-exchange flow path and a second heat-exchange flow path, and configured to exchange heat between air flowing in the first heat-exchange flow path and air flowing in the second heat-exchange flow path;
a first air flow path through which air heated by heat generated in the engine is introduced into the first heat-exchange flow path through the opening of the intake duct and is discharged to outside of the vehicle from the first heat-exchange flow path; and
a second air flow path through which outside air introduced into the second heat-exchange flow path is introduced into the vehicle interior through an outside air inlet of the intake duct.

2. The air-conditioning device for a vehicle according to claim 1, further comprising a radiation heat recovering portion that is provided at an introducing port of the first air flow path and recovers radiation heat from the engine.

3. The air-conditioning device for a vehicle according to claim 2, wherein the radiation heat recovering portion includes an air introducing plate having an opening in a direction toward the engine and having a box shape in which an opening width in a longitudinal direction of the vehicle is increased toward the engine from the introducing port of the first air flow path.

4. The air-conditioning device for a vehicle according to any one of claims 1 to 3, further comprising a first blower fan that is provided between the introducing port of the first air flow path and the first heat-exchange flow path, and sends air inside an engine room housing the engine to the first heat-exchange flow path.

5. The air-conditioning device for a vehicle according to any one of claims 1 to 4, wherein the heat exchanger is installed such that a side opposite to the outside air inlet in the heat exchanger is separated from the intake duct.

6. The air-conditioning device for a vehicle according to any one of claims 1 to 5, wherein a discharge port of the first air flow path is located at a back side of a fender of the vehicle.

7. The air-conditioning device for a vehicle according to any one of claims 1 to 6, further comprising a second blower fan provided inside the vehicle interior,
wherein the discharge port of the second air flow path is connected to the second blower fan.

8. The air-conditioning device for a vehicle according to any one of claims 1 to 7, wherein the opening of the intake duct is provided at a position where a plane defined by a line obtained by projecting an exhaust pipe, which is a passage for air burned at the engine, rearward along a vehicle axis from front of the vehicle, and a line that passes the opening formed at the intake duct and is parallel to the projected line becomes rectangular.

9. The air-conditioning device for a vehicle according to any one of claims 1 to 8, wherein the heat exchanger is a sensible heat exchanger.
